# EUROPEAN PATENT APPLICATION

(11) **EP 2 544 043 A1**
(43) Date of publication of application: **09.01.2013**
(21) Application number: 11750447.2
(22) Date of filing: 04.02.2011
(51) Int. Cl.: G02F 1/1333, E06B 7/28, G09F 9/00

(54) **BUILDING MATERIAL WITH DISPLAY DEVICE, AND DISPLAY DEVICE**

(30) Priority: 02.03.2010 JP 2010045470
(71) Applicant: Sharp Kabushiki Kaisha, Osaka-shi, Osaka 545-8522 (JP)
(72) Inventor: FUJIWARA, Sayuri, Osaka-shi, Osaka 545-8522 (JP); SATOH, Eiji, Osaka-shi, Osaka 545-8522 (JP); ASAOKA, Yasushi, Osaka-shi, Osaka 545-8522 (JP); DEGUCHI, Kazuhiro, Osaka-shi, Osaka 545-8522 (JP); WATANABE, Hisashi, Osaka-shi, Osaka 545-8522 (JP)
(74) Representative: Müller-Boré & Partner Patentanwälte
(86) International application number: PCT/JP2011/052378
(87) International publication number: WO 2011/108334

(57) **Abstract**

A building material in which an image can be displayed on a transparent plate such as a windowpane is realized using a configuration that is simple and low-cost. A window member (5) includes a display panel (11) having a display region (11a) that can switch between a light transmitting state and a non-light-transmitting state and a frame region (11b) serving as a non-display region formed on an outer side of the display region (11a), a light-transmitting cover (40) disposed on the display panel so as to cover at least a part of the frame region (11b) and at least a part of the display region (11a) that is adjacent to the frame region (11b), and a pair of windowpanes (3, 3) that are held in parallel in the window frame (2). The light-transmitting cover (40) is shaped such that the thickness thereof decreases from the display region (11a) toward the frame region (11b).

## Description

### Technical Field

The present invention relates to a building material that can display an image using an internally-provided display device, and a display device disposed in the building material.

### Background Art

Conventionally, there is known to be a building material that can display an image using an internally-provided display device, that is to say, a building material with a display device. As disclosed in JP H9-236785A, for example, it is conceivable that such a building material with a display device has a configuration in which a display that transmits external light when the light scattering characteristic thereof is reduced is used as the windowpane.

### Disclosure of Invention

Incidentally, when a light-transmittable display panel (display) is used, as is, as a windowpane as with the above-described configuration of JP 9-236785A, various sizes of display panels need to be manufactured according to the size of the windowpane, which is not very realistic in view of cost and the like.

An object of the present invention is to realize a building material with a display device using a simple and low-cost configuration.

A building material with a display device according to one aspect of the present invention includes: a display panel having a display region that can switch between a light transmitting state and a non-light-transmitting state and a frame region serving as a non-display region formed on an outer side of the display region; a lens part disposed on the display panel so as to cover at least a part of the frame region and at least a part of the display region that is adjacent to the frame region; and a pair of transparent plates held in parallel within a holding frame so as to sandwich the display panel and the lens part, wherein the lens part is shaped such that the thickness thereof decreases from the display region toward the frame region.

According to the present invention, it is possible to realize a building material with a display device using a simple and low-cost configuration.

### Brief Description of Drawings

[FIG. 1] FIG. 1 is a diagram showing a schematic configuration of a window member according to a first embodiment.
[FIG. 2] FIG. 2 is a diagram showing a schematic configuration of a display device according to the first embodiment.
[FIG. 3] FIG. 3 is a diagram schematically showing a cross-sectional configuration of a display panel according to the first embodiment.
[FIG. 4] FIG. 4 is an exploded perspective view of the schematic configuration of the display device according to the first embodiment.
[FIG. 5] FIG. 5 is an exploded perspective view of a panel member according to the first embodiment.
[FIG. 6] FIG. 6 is a cross-sectional diagram showing how light is refracted by the panel member at an end of the display panel according to the first embodiment.
[FIG. 7A] FIG. 7A is a diagram showing a configuration of the display panel side of one panel member.
[FIG. 7B] FIG. 7B is a diagram showing a configuration of the display panel side of another panel member.
[FIG. 8A] FIG. 8A is a perspective diagram showing an enlarged view of a mating portion of the panel member according to the first embodiment.
[FIG. 8B] FIG. 8B is a perspective diagram showing an enlarged view of the mating portion of the panel member according to the first embodiment.
[FIG. 9] FIG. 9 is a perspective view of a schematic configuration of a panel member according to Variation 1 of the first embodiment.
[FIG. 10] FIG. 10 is an exploded perspective view of a schematic configuration of a panel member according to Variation 2 of the first embodiment.
[FIG. 11] FIG. 11 is an exploded perspective view of a schematic configuration of a panel member according to Variation 3 of the first embodiment.
[FIG. 12] FIG. 12 is a perspective view of a configuration of a joining portion of a panel member according to Variation 4 of the first embodiment.
[FIG. 13] FIG. 13 is an exploded perspective view of a schematic configuration of a light-transmitting cover according to a second embodiment.
[FIG. 14] FIG. 14 is a cross-sectional diagram showing how light is refracted by a support part according to the second embodiment.
[FIG. 15] FIG. 15 is an exploded perspective view of a schematic configuration of a light-transmitting cover according to a third embodiment.
[FIG. 16] FIG. 16 is a diagram showing a schematic configuration of a panel member according to another example of the third embodiment.
[FIG. 17] FIG. 17 is an exploded perspective view of a schematic configuration of a light-transmitting cover according to a fourth embodiment.
[FIG. 18] FIG. 18 is a diagram showing a schematic configuration of a panel member according to another example of the fourth embodiment.
[FIG. 19] FIG. 19 is an exploded perspective view of a schematic configuration of a light-transmitting cover according to a fifth embodiment.
[FIG. 20] FIG. 20 is a diagram showing an example in which panel members according to the fifth embodiment are disposed inside a window frame.
[FIG. 21] FIG. 21 is a cross-sectional view showing how light is refracted by an end of a display panel in the case of using a panel member according to another embodiment.
[FIG. 22] FIG. 22 is a cross-sectional view showing how light is refracted by an end of a display panel in the case of using a panel member according to another embodiment.
[FIG. 23] FIG. 23 is a cross-sectional view showing how light is refracted by an end of a display panel in the case of using a panel member according to another embodiment. Description of the Invention

A building material with a display device according to an embodiment of the present invention includes: a display panel having a display region that can switch between a light transmitting state and a non-light-transmitting state and a frame region serving as a non-display region formed on an outer side of the display region; a lens part disposed on the display panel so as to cover at least a part of the frame region and at least a part of the display region that is adjacent to the frame region; and a pair of transparent plates held in parallel within a holding frame so as to sandwich the display panel and the lens part, wherein the lens part is shaped such that the thickness thereof decreases from the display region toward the frame region (first configuration).

With the above building material with a display device, the frame region of the display panel can be made less readily visible using the lens part mounted to the display panel. Also, the display panel disposed between the pair of transparent plates can be made transparent by switching the display panel to the light transmitting state, thus enabling viewing the background on the opposite side of the transparent plates. On the other hand, by switching the display panel to the non-light-transmitting state, an image appears to stand out on the transparent plates.

Accordingly, disposing the display panel, to which the lens part is mounted, between the pair of transparent plates obtains an effect according to which it is as if an image is displayed on the transparent plates. In other words, according to the above-described configuration, a building material that can display an image can be realized using a simple and low-cost configuration even when the size of the transparent plates changes.

Here, the non-light-transmitting state includes all states in which light is not transmitted, such as a state in which light is scattered and a state in which light is absorbed. Also, the range that is switched to the non-light-transmitting state may be the entire face of the display region or part of the display region.

In the building material with a display device according to the first configuration, it is preferable that the frame region is formed so as to surround the display region, and the lens part is provided so as to cover the entirety of the frame region (second configuration).

This enables the entirety of the frame region of the display panel to be made less readily visible using the lens part. Accordingly, it is possible to more reliably prevent the opposite side of the transparent plates from being less readily visible due to the display panel.

In the building material with a display device according to the second configuration, it is preferable that the lens part is formed in the shape of a frame such that a central portion of the display region is exposed (third configuration). In this way, the lens part is not provided in the central portion where there is no need for light to be refracted by the lens part in the display panel, thus reducing the weight and material cost of the lens part compared to the case of providing the lens part over the entire face of the display panel.

In the building material with a display device according to any one of the first to third configurations, a support part that joins the lens part and the holding frame so as to support the lens part and the display panel within the holding frame may be further included (fourth configuration).

Joining the lens part and the holding frame using the support part in this way enables the lens part to be more stably supported to the holding frame compared to the case where the lens part and the holding frame are adhered using an adhesive or the like.

In the building material with a display device according to the fourth configuration, at least two of the support parts may be provided between the lens part and the holding frame (fifth configuration). This enables the lens part to be supported to the holding frame in a more stable state using two support parts.

In the building material with a display device according to the fourth or the fifth configuration, it is preferable that the support parts are joined to the lens part on opposite sides of the lens part in a view from a direction orthogonal to a surface of the transparent plate (sixth configuration). According to this, the lens part can be supported to the holding frame in an even more stable state.

In the building material with a display device according to any one of the first to sixth configurations, it is preferable that the lens part is disposed so as to be on two faces of the display panel (seventh configuration). Accordingly, the frame region of the display panel appears to be transparent regardless of from which side the display panel is viewed. Consequently, by disposing the display panel and the lens part having the above-described configuration between the pair of glass pieces, they can be used as the windowpanes or the like of a house, building, or the like with less of a sense of strangeness.

In the building material with a display device according to the seventh configuration, it is preferable that a protruding part that projects toward the display panel side is provided on one of the lens parts disposed on the two faces of the display panel, and a mating groove part for mating with the protruding part is provided on the other one of the lens parts (eighth configuration). According to this, the lens parts respectively disposed on the two faces of the display panel can be easily joined without using an adhesive or the like.

In the building material with a display device according to any one of the fourth to eighth configurations, it is preferable that the support part is constituted by a column-shaped member that has a curved face such that the thickness of the support part on one side in the width direction is lower than that on the other side, and wiring connected to the display panel is disposed so as to be covered by the one side of the support part in the width direction (ninth configuration).

Accordingly, the support part having a curved face obtains an effect similar to that of the lens part, and therefore the wiring connected to the display panel is made less readily perceptible by the support part. Consequently, the display panel can be disposed between the pair of transparent plates with less of a sense of strangeness.

In the building material with a display device according to the ninth configuration, it is preferable that the curved face is formed such that the thickness of the support part decreases from both width-direction sides of the support part toward a central portion, and the wiring is disposed so as to be covered by the central portion of the curved face (tenth configuration).

According to this, light can be more efficiently refracted in the central portion of the support part with respect to the width direction, and thus the wiring disposed in the center in the width direction is even less readily perceptible. Consequently, the display panel can be disposed between the pair of transparent plates with even less of a sense of strangeness.

In the building material with a display device according to any one of the first to tenth configurations, it is preferable that a recessed part in which the display panel can be accommodated is formed on a face of the lens part on the display panel side (eleventh configuration). This enables the display panel to be more reliably held by the lens part.

In the building material with a display device according to any one of the first to eleventh configurations, it is preferable that the lens part is constituted by a plurality of frame members that are joined together (twelfth configuration). According to this, various sizes of lens parts can be configured by changing the lengths of the frame members.

In the building material with a display device according to the twelfth configuration, it is preferable that for each of the frame members, a projecting part that projects in the longitudinal direction of the frame member is formed on one end part, and a mating recessed part that has a shape capable of mating with the projecting part is formed on the other end part, and on the end parts of the frame members, the projecting parts and the mating recessed parts are formed on the side that comes into contact with the display panel (thirteenth configuration).

This enables the frame members to be joined together by the mating of the projecting parts with the mating recessed parts. Moreover, since these projecting parts and mating recessed parts are formed on the end parts of the frame members that are on the side that comes into contact with the display panel, it is possible to suppress a reduction in the transparency effect of the lens part due to light be greatly refracted by the projections and recesses of the projecting parts and the mating recessed parts.

A display device according to an embodiment of the present invention includes: a display panel having a display region that can switch between a light transmitting state and a non-light-transmitting state and a frame region serving as a non-display region formed on an outer side of the display region; a lens part disposed on the display panel so as to cover at least a part of the frame region and at least a part of the display region that is adjacent to the frame region; and a support part that joins the lens part and a holding frame that holds a pair of transparent plates that are disposed so as to sandwich the display panel and the lens part (fourteenth configuration).

The following describes preferred embodiments of a building material of the present invention with reference to the drawings. Note that the following description takes the example of the case where a transmissive liquid crystal panel is used as a display panel. Also, regarding the dimensions of the members in the drawings, the dimensions of the actual constituent members, the ratios of the dimensions of the members, and the like are not shown faithfully.

### First Embodiment

### Overall configuration

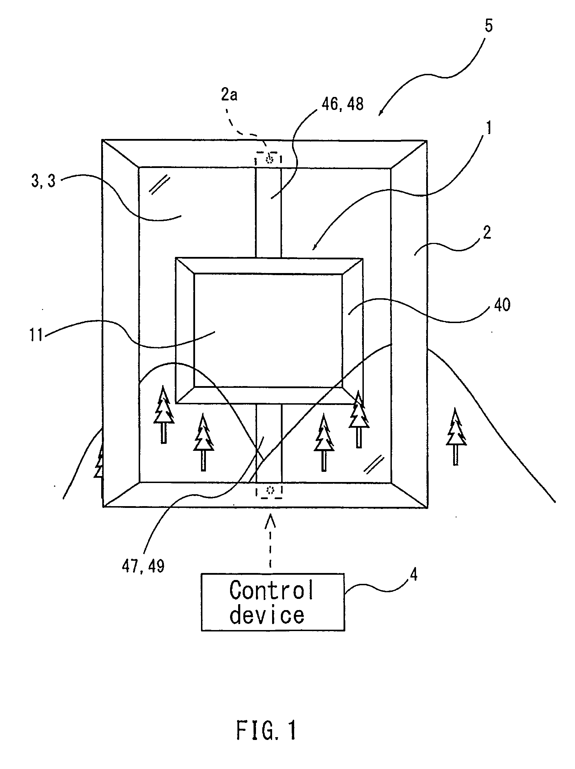

FIG. 1 is a diagram showing a schematic configuration of a window member 5 (building material with a display device) according to a first embodiment of the present invention. In FIG. 1, the window member 5 of the present embodiment is configured such that a display device 1 is disposed between a pair of windowpanes 3 (transparent plates) mounted in a window frame 2 (holding frame). The display device 1 is a so-called see-through type of liquid crystal display device that can switch between a light scattering state and a light transmitting state.

The window frame 2 is configured so as to be able to hold the windowpanes 3 by the outer peripheral sides thereof, similarly to window frames having a general configuration that are used in houses, buildings, and the like. The window frame 2 can hold the pair of windowpanes 3 in a separated state such that the display device 1 can be disposed therebetween. A description of the detailed configuration will not be given for the window frame 2 and the windowpanes 3 since they are similar to general window frames and windowpanes that are used in houses, buildings, and the like. It should be noted, however, that the windowpanes 3 have a larger outer form than a later-described display panel 11 of the display device 1.

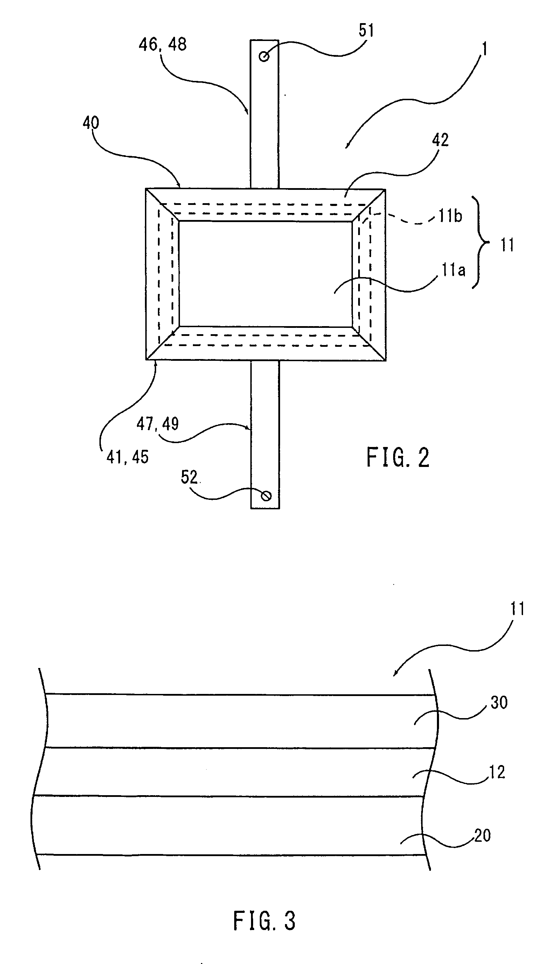

Multiple mounting holes 2a for mounting later-described support parts 46 to 49 of the display device 1 are provided in the window frame 2. Bolt holes 51 and 52 (see FIG. 2) of the support parts 46 to 49 are aligned with the mounting holes 2a, and the support parts 46 to 49 and the window frame 2 are joined by inserting bolts into the mounting holes 2a and the bolt holes 51 and 52 and fastening the bolts to nuts or the like. Note that although the window frame 2 and the support parts 46 to 49 are joined using bolts in this embodiment, there is no limitation to this, and any connection structure may be used, such as adhering the window frame 2 and the support parts 46 to 49 together using an adhesive material.

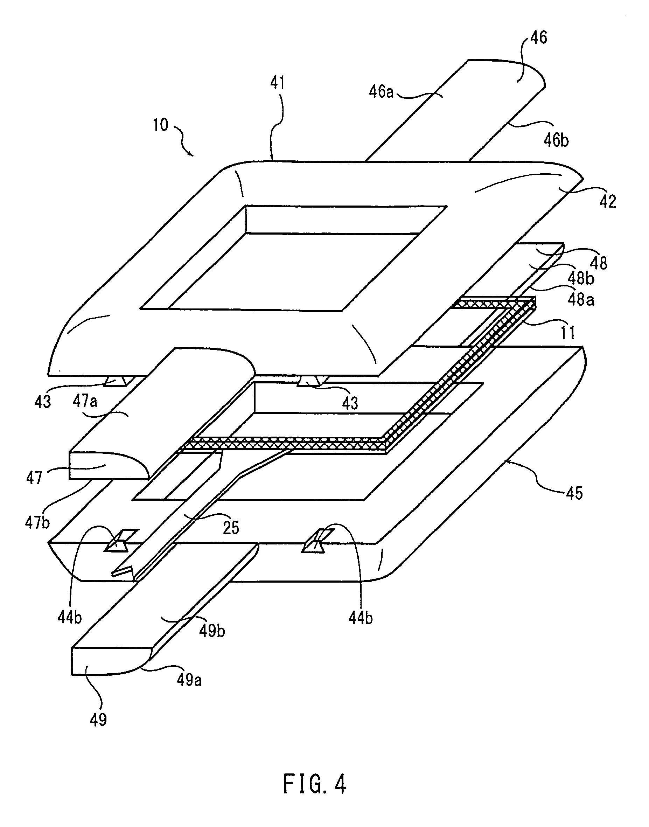

As shown in FIGS. 2 and 4, the display device 1 includes a display panel 11, a light-transmitting cover 40 (lens part) that is made of resin and is mounted to the display panel 11, and the support parts 46 to 49 that are made of resin and are joined on one end side to the light-transmitting cover 40. The configurations of the light-transmitting cover 40 and the support parts 46 to 49 will be described later. Also, a control device 4 that controls the display performed by the display panel 11 is connected to the display device 1 so as to be able to exchange signals via later-described flexible wiring 25 or the like (see FIG. 1).

### Configuration of display panel

As shown by the schematic cross-sectional structure in FIG. 3, the display panel 11 includes an active matrix substrate 20 on which a large number of pixels are arranged in a matrix, and a counter substrate 30 arranged in opposition to the active matrix substrate 20. The display panel 11 includes a PDLC (Polymer Dispersed Liquid Crystal) layer 12, which can switch between a light scattering state and a light transmitting state, between the active matrix substrate 20 and the counter substrate 30.

The PDLC layer 12 is obtained by liquid crystal being dispersed as droplets in a polymer. This PDLC layer 12 has the property of switching between a light transmitting state and a light scattering state depending on whether an electric field is applied. For example, in the display panel 11, the PDLC layer 12 scatters light when an electric field is not applied, and becomes transparent so as to transmit light when an electric field is applied. Note that PNLC (Polymer Network Liquid Crystal) may be used as the PDLC layer 12. Also, in the display panel 11, a configuration is possible in which the PDLC layer 12 becomes transparent so as to transmit light when an electric field is not applied, and becomes non-transparent so as to scatter light when an electric field is applied.

The active matrix substrate 20 is obtained by providing multiple TFTs (Thin Film Transistors, which are not shown), pixel electrodes, various wiring (e.g., source wiring and gate wiring), and the like on a transparent substrate such as a glass substrate. Note that a description of the TFT configuration will not be given since it is the same as conventional configurations.

The pixel electrodes are transparent electrodes, and are formed by, for example, a conductive material that has light-transmitting characteristics, such as ITO (indium tin oxide). The pixel electrodes are disposed separated from each other in each pixel. Pixels serving as the unit of image display are defined by these pixel electrodes.

Although not particularly shown, TFT source electrodes, gate electrodes, and drain electrodes are connected to the source wiring, the gate wiring, and the pixel electrodes. Signals are input to the TFTs via the gate wiring and the source wiring, and a detailed description of aspects of the driving of the TFTs will not be given since it is the same as that in conventional liquid crystal display devices.

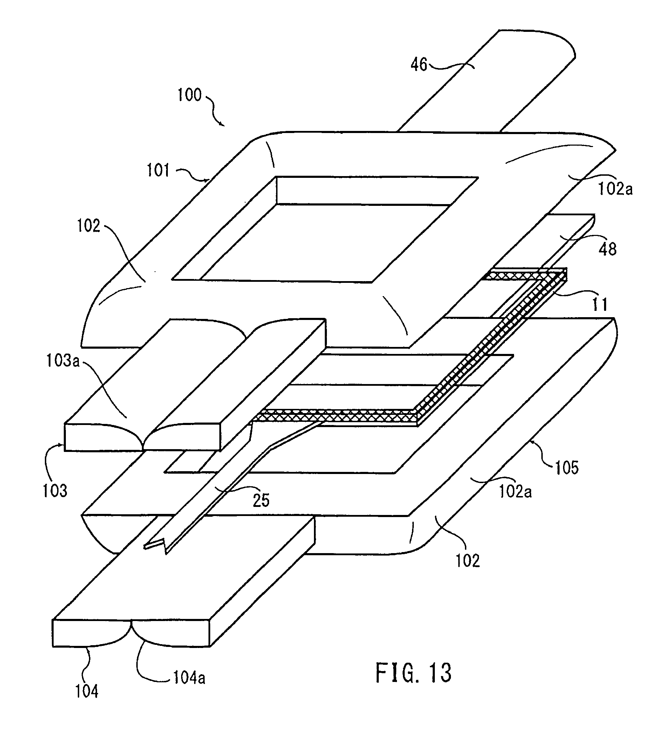

One end side of the flexible wiring 25 is connected to the control device 4 disposed outside the windowpanes 3, and the other end side thereof is connected to the active matrix substrate 20 (see FIG. 4). In the present embodiment, the flexible wiring 25 is connected to one side of the active matrix substrate 20 in the vicinity of the center of that side. Note that in FIG. 4, the portion of the active matrix substrate 20 where peripheral circuitry, a sealing part, and the like are formed, that is to say, a later-described frame region, is indicated by cross-hatching. The same follows for the other perspective views as well (FIGS. 13, 15, 17, and 19).

The counter substrate 30 is obtained by providing a counter electrode, which is made of a transparent conductive film of ITO etc., and the like on a transparent substrate such as a glass substrate.

With the display panel 11 configured as described above, the PDLC layer 12 can be switched between the light transmitting state and the light scattering state in pixel units by controlling the electric field applied to the PDLC layer 12, that is to say, the voltage applied between the counter electrode and the pixel electrodes. Specifically, by controlling the application of an electric field to the PDLC layer 12 using the TFTs, transmission parts serving as light transmitting regions and scatter parts serving as light scattering regions are selectively formed in the display panel 11.

Also, the display panel 11 has a display region 11a in which images are displayed by the selective formation of the above-described transmission parts and scatter parts, and a frame region 11b provided outside of the display region 11a (see FIG. 2). In the case of the present embodiment, the display region 11a is formed in a rectangular shape, and the frame region 11b is formed so as to surround the display region 11a. Formed in this frame region 11b are, for example, a sealing part for sealing the active matrix substrate 20 and the counter substrate 30 together, and a driving circuit for outputting signals to the source wiring and the gate wiring. The frame region 11b is therefore a non-display region in which images are not displayed.

### Configuration of light-transmitting cover

The light-transmitting cover 40 is provided so as to cover the frame region 11b of the display panel 11. As shown in FIGS. 2 and 4, this light-transmitting cover 40 is made up of a pair of rectangular panel members 41 and 45. The panel members 41 and 45 are each a transparent resin member and are mounted to the display panel 11 so as to sandwich the display panel 11 on both sides.

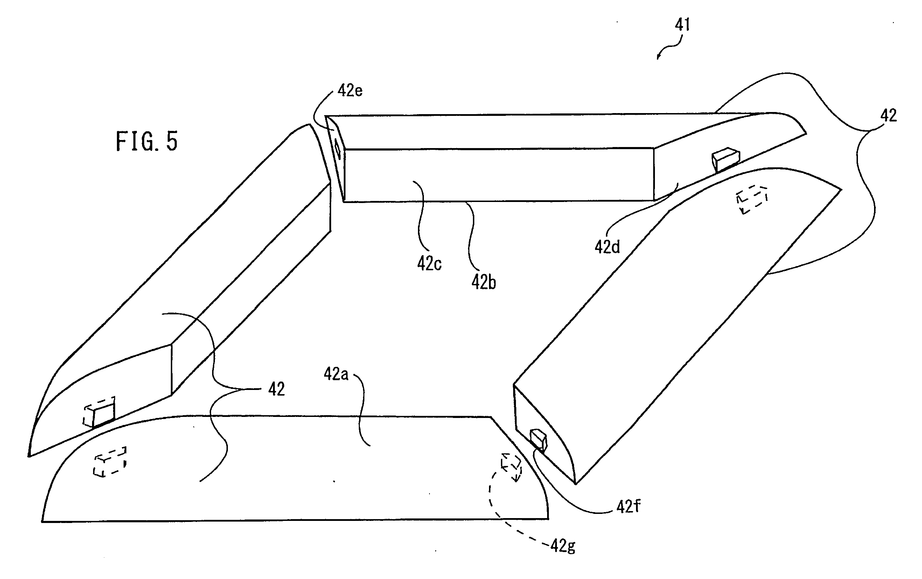

The panel members 41 and 45 are each made up of four members corresponding to the sides of the display panel 11. Specifically, as shown in FIGS. 4 and 5, the panel members 41 and 45 are each configured by combining four columnar frame members 42 that are longer than the respective sides of the display region 11a of the display panel 11 (FIG. 5 showing only the panel member 41). Accordingly, the panel members 41 and 45 each take the shape of a frame having a hole part in the central portion. Forming the panel members 41 and 45 into such a shape reduces the weight and material cost of the panel members compared to the case of forming the panel members into a plate shape so as to cover the entirety of the display panel 11. Note that FIG. 5 does not show portions of the frame members 42 that are joined to the later-described support parts 46 to 49 (the same follows for the figures showing panel members in the descriptions of other embodiments below).

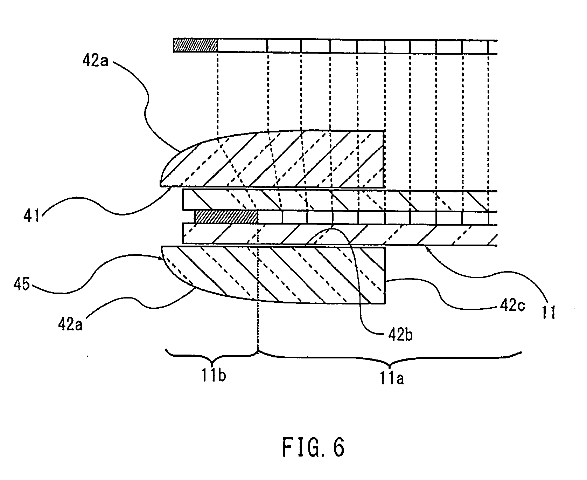

As shown in FIG. 5, each frame member 42 is a bar-shaped member having a cross-section shaped as substantially 1/4 of an ellipse. Specifically, each frame member 42 has a curved face 42a according to which the thickness of the frame member 42 gradually decreases toward one side in the lateral direction, a flat bottom face 42b, and a side face 42c located on the other side of the frame member 42 with respect to the lateral direction. The curved face 42a of each frame member 42 functions as a lens face that refracts light that is incident thereon from the bottom face 42b side. As shown in FIG. 6, the side face 42c of each frame member 42 is orthogonal to the display panel 11. Note that the side faces 42c of the frame members 42 may be formed so as to oblique with respect to the display panel 11 as long as the angle is such that images in the display region 11a are not greatly distorted by the refraction of light.

As shown in FIG. 5, each frame member 42 is formed so as to be substantially trapezoidal in a plan view. Specifically, end faces 42d and 42e that constitute the oblique line portions of a trapezoid in a plan view are formed on respective longitudinal ends of each frame member 42. Accordingly, a rectangular frame can be constituted by joining together the end faces 42d and 42e of the four frame members 42.

Provided on the end face 42d on one side of each frame member 42 is a projecting part 42f that is trapezoidal in a plan view so as to increase in width outward in the longitudinal direction of the frame member 42. Also, formed on the end face 42e on the other side of each frame member 42 is a mating recessed part 42g that can be mated with the projecting part 42f of another frame member 42. Accordingly, the four frame members 42 can be joined to each other by mating the projecting parts 42f with the mating recessed parts 42g. Moreover, by forming the projecting parts 42f so as to be trapezoidal in a plan view such that the width increases outward in the longitudinal direction of the frame member 42 as described above, it is possible to prevent frame members 42 that are joined together from deviating in the direction of separation.

As shown in FIG. 5, on the end faces 42d and 42e of the frame members 42, the projecting parts 42f and the mating recessed parts 42g are formed on the bottom face 42b side of the frame member 42, that is to say, on the side that comes into contact with the display panel 11. Accordingly, there is less influence on the refraction of light by the recesses and projections of the projecting parts 42d and the mating recessed parts 42e compared to the case where, on the end faces 42d and 42e of the frame members 42, the projecting parts 42d and the mating recessed parts 42e are formed on the side on which the panel member 41 is perceptible (the curved face 42a side of the frame members 42). Accordingly, the frame region 11b of the display panel 11 can be made more naturally transparent using the panel member 41.

As shown in FIG. 2, the frame members 42 are formed at a size according to which they span the display region 11a and the frame region 11b of the display panel 11 when assembled into the frame-shaped panel members 41 and 45. In other words, as shown by the cross-section in FIG. 6, the panel members 41 and 45 cover not only the frame region 11b of the display panel 11, but also the outer peripheral side of the display region 11a.

Since the frame members 42 are provided with the curved faces 42a having the above-described shape, the panel members 41 and 45 have a cross-sectional shape such that the thickness of the panel members 41 and 45 gradually decreases toward the outer side of the display panel 11 when disposed on the display panel 11. Due to forming the panel members 41 and 45 in such a shape, part of the light that is incident on the frame region 11b from outside the display panel 11 (the upper side in the drawings) can be refracted by the panel member 41 in an oblique direction toward the outer peripheral portion of the display region 11a, as shown by the broken lines in FIG. 6.

Accordingly, images on the outer peripheral side of the display region 11a can be projected on the portion of the panel member 41 that covers the frame region 11b. In other words, due to providing the above-described panel member 41 on the outer peripheral side of the display panel 11 enables reflecting the outer peripheral side of the display region 11a onto the panel member 41 in the frame region 11b that is originally provided, thus making the frame region 11b less readily visible.

Effects of the above-described panel member 41 will now be described in detail with reference to FIG. 6. As shown in FIG. 6, light that has passed through the outer peripheral side of the display region 11a is incident on the panel member 41 and refracted by the surface of the panel member 41. Since the panel member 41 has the curved face 42a on the surface thereof such that the thickness decreases toward the outer side of the display panel 11, the light that is incident on the panel member 41 at this time advances straight in a direction that is perpendicular to the display face of the display panel 11 at the surface of the panel member 41. Accordingly, as shown in FIG. 6, images formed on the outer peripheral side of the display region 11a of the display panel 11 appear to have been enlarged to the frame region 11b. Accordingly, the frame region 11b of the display panel 11 becomes less readily visible. Pixels in the outer peripheral portion of the display panel 11 that can be seen by a subject via the panel member 41 are schematically shown above the broken lines in FIG. 6. As can be understood from this figure as well, the non-display region 11b appears to the subject to be smaller than it actually is due to the curved face 42a serving as the surface of the panel member 41. In other words, the panel member 41 constitutes a lens part. Note that when the display panel 11 is viewed from the panel member 45 side, the frame region 11b of the display panel 11 becomes less readily visible since the panel member 45 functions as a lens part likewise to the panel member 41.

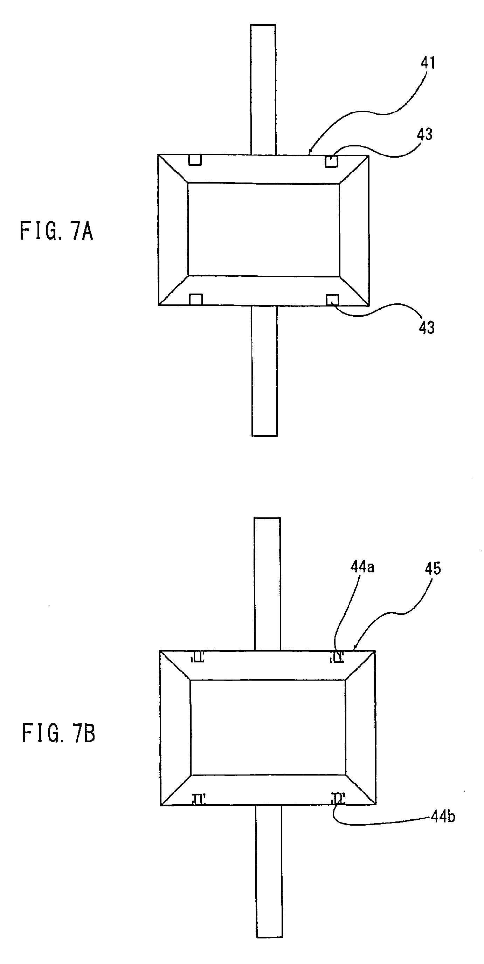

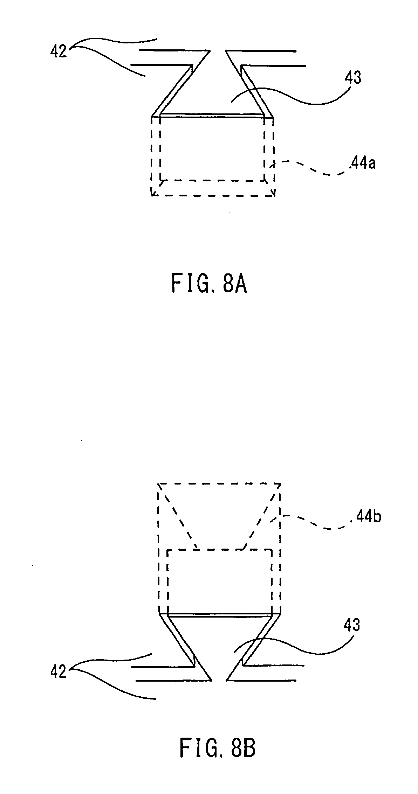

As shown in FIGS. 4 and 7A, two protruding parts 43 are provided aligned in the longitudinal direction of the frame member 42 on the bottom faces 42b of a pair of opposing frame members 42 of the panel member 41 that is one of the pair of panel members 41 and 45. Specifically, four protruding parts 43 are formed on the one panel member 41. The protruding parts 43 are formed on the frame members 42 so as to be on the outer peripheral side with respect to the panel member 41. Also, as shown in FIGS. 8A and 8B as well, the protruding parts 43 are formed in a columnar shape that has a trapezoidal cross-section whose width increases toward to the projecting end, and that extends in the width direction of the frame members 42 on which the protruding parts 43 are formed.

As shown in FIGS. 7B, 8A, and 8B, mating groove parts 44a and 44b that have a triangular cross-section with which the protruding parts 43 can be mated are formed in the other panel member 45. Specifically, the mating groove parts 44a shown in FIGS. 7B and 8A are formed in the frame member 42 located on the upper side of the panel member 41 when the panel member 41 is provided upright between the pair of windowpanes 3, and the mating groove parts 44b shown in FIGS. 7B and 8B are formed on the frame member 42 located on the lower side of the panel member 41. The mating groove parts 44a formed on the frame member 42 on the upper side of the panel member 41 have a groove length that is roughly the same as the length of the protruding parts 43. The mating groove parts 44b formed on the frame member 42 on the lower side of the panel member 41 have a groove length that is at least two times the length of the protruding parts 43.

According to this configuration, after one of the protruding parts 43 is fitted into a mating groove part 44b, the other protruding part 43 can be fit into a mating groove part 44a by relatively moving the pair of panel members 41 and 45 in the longitudinal direction of the mating groove part 44b. Moreover, once the protruding parts 43 are mated with the mating groove parts 44a and 44b, the mating between the protruding parts 43 and the mating groove parts 44a and 44b is maintained by the weight of the panel member 41. Accordingly, horizontal misalignment between the panel members 41 and 45 can be prevented when the light transmission cover 40 is provided upright. Also, since the protruding parts 43 and the mating groove parts 44a and 44b are provided on the outer peripheral side of the panel members 41 and 45 where the lens effect is high, it is possible to make blemishes from processing, gaps, and the like less readily visible due to the light refraction of the panel members 41 and 45.

### Configuration of support parts

As shown in FIG. 4, the support parts 46 and 47 are provided so as to extend outward from the longitudinal center of opposing sides of the frame-shaped panel member 41. Similarly, the support parts 48 and 49 are also provided so as to extend outward from the longitudinal center of opposing sides of the frame-shaped panel member 45. The support part 46 provided on the panel member 41 and the support part 48 provided on the panel member 45 are provided at positions such that they overlap each other when the panel members 41 and 45 are combined together. Also, the support part 47 provided on the panel member 41 and the support part 49 provided on the panel member 45 are also provided at positions such that they overlap each other when the panel members 41 and 45 are combined together. Note that the bolt holes of support parts 46 to 49 are not shown in FIG. 4.

In the present embodiment, the support parts 46 to 49 are joined to the two frame members 42 that constitute the opposing sides of the panel members 41 and 45. The connection structure between the support parts 46 to 49 and the frame members 42 is similar to the above-described connection structure between the panel members 41 and 45. Although a description of details of the configuration will not be given for this reason, it is sufficient that, for example, protruding parts are formed on the support parts 46 to 49, and mating groove parts are formed on the frame members 42.

The support parts 46 to 49 are formed in the shape of a column whose cross-section is similar to that of the frame members 42. Specifically, the support parts 46 to 49 have curved faces 46a to 49a that are similar to the curved faces 42a of the frame members 42, and bottom faces 46b to 49b that are similar to the bottom faces 42b of the frame members 42. The support parts 46 to 49 are joined to the frame members 42 such that the bottom faces 46b to 49b are flush with the bottom faces 42b of the frame members 42. In other words, the support parts 46 to 49 are joined to the frame members 42 such that the curved faces 46a to 49a are located on the curved face 42a side of the frame members 42.

The support parts 47 and 49 that support the panel members 41 and 45 between the pair of windowpanes 3 from below cover the flexible wiring 25 that is connected to the active matrix substrate 20. Specifically, the flexible wiring 25 is sandwiched by the two support parts 47 and 49 that support the pair of panel members 41 and 45 from the lower sides thereof. This flexible wiring 25 is disposed at a position relative to the support parts 47 and 49, which have the same lens effect as the frame members 42, such that the flexible wiring 25 is less readily visible due to light refraction. Specifically, the flexible wiring 25 is disposed on the side where the thickness of the support part 45 is low, similarly to the above-described case of the frame region 11b of the display panel 11. Accordingly, the flexible wiring 25 appears to be narrower than it actually is due to the support parts 47 and 49 as well, similarly to the panel members 41 and 45 described above.

Note that as shown in FIG. 2, bolt holes into which bolts can be inserted are formed on the tip sides of the support parts 46 to 49 so as to enable mounting to the mounting holes 2a of the window frame 2 (see FIG. 1) using bolts. The bolt holes formed in the support parts 46 and 48 constitute the bolt hole 51 in FIG. 2, and the bolt holes formed in the support parts 47 and 49 constitute the bolt hole 52 in FIG. 2.

According to the above configuration, the panel members 41 and 45 make the frame region 11b less readily perceivable, and the frame region 11b and the display region 11a appear to be transparent when the display region 11a is made transparent by switching the display panel 11 to the light transmitting state. Moreover, the flexible wiring 25 that is connected to the active matrix substrate 20 of the display panel 11 also appears to be narrower than it actually is due to the support parts 47 and 49 whose configuration is similar to the frame members 42 of the panel member 41. Therefore, according to the above-described configuration, the entirety of the display device 1 appears to be substantially transparent.

Note that although the support parts 46 to 49 are provided in the longitudinal center of the frame members 42 of the panel members 41 and 45 in this embodiment, there is no limitation to this, and the support parts 46 to 49 may be provided at any position where the panel members 41 and 45 and the display panel 11 can be supported, such as at longitudinal end parts of the frame members 42. Also, besides the above-described support parts 46 to 49, multiple support parts may be provided at places thought to be necessary in view of strength. In this case, it is sufficient that the support parts are provided giving consideration to the shape of the window frame 2, another display panel disposed between the windowpanes 3, and the like.

### Effects of first embodiment

In the present embodiment, the window member 5 is configured by disposing the display device 1, which has the frame region 11b whose outer form is smaller than the pair of windowpanes 3, between the windowpanes 3. Also, in this display device 1, the frame region 11b of the display panel 11 having a see-through configuration is covered by the light-transmitting cover 40 that has the curved faces 42a. Accordingly, on the outer peripheral side of the display panel 11, the display region 11a appears to be larger than it actually is, and the frame region 11b appears to be smaller than it actually is, due to the light-transmitting cover 40. Consequently, the frame region 11b of the display panel 11 is less readily visible, and the other side of the display device 1 can be seen through the display device 1 over a wide range when images are not being displayed by the display panel 11. On the other hand, when images are displayed by the display panel 11, it is possible to perform display such that the images are reflected on the windowpanes 3.

In other words, by disposing the display panel 11, to which the light-transmitting cover 40 is mounted, between the pair of glass windows 3 as described above, the display device 1 can be disposed in the transparent windowpanes 3 without a sense of strangeness. This enables disposing the display device 1 in various sizes of windowpanes 3. This eliminates the need to manufacture a display device in conformity with the size of the windowpanes 3 as in conventional technology, and reduces manufacturing cost for the window member as a whole.

Also, the display panel 11 is supported between the pair of windowpanes 3 by the support parts 46 to 49. For this reason, even in the case of exposure to sunlight and ultraviolet light and large temperature changes, the display panel 11 can be held more stably than in the case of using an adhesive or the like. Furthermore, by providing the support parts 46 and 47 above and below the panel member 41, and also providing the support parts 48 and 49 above and below the panel member 45, the panel members 41 and 45 and the display panel 11 can be stably supported even in the case where vibration or the like occurs.

Also, in the present embodiment, the two panel members 41 and 45 are joined by mating the protruding parts 43 provided on the one panel member 41 with the mating groove parts 44a and 44b provided on the other panel member 45. This enables joining the two panel members 41 and 45 using a simple configuration, without using an adhesive or the like.

Also, in the present embodiment, the panel members 41 and 45 are configured by mating the projecting parts 42f provided on the end faces 42d of the frame members 42 with the mating recessed parts 42g provided on the end faces 42e of other frame members 42. Accordingly, the size of the panel members 41 and 45 can be easily changed by changing the lengths of the frame members 42. Moreover, on the end faces 42d and 42e, the projecting parts 42f and the mating recessed parts 42g are formed on the bottom face 42b side of the frame members 42 and therefore the projecting parts 42f and the mating recessed parts 42g have little effect on the refraction of light. Accordingly, the frame region 11b appears narrow even when the projecting parts 42f and the mating recessed parts 42g are provided.

Furthermore, since the panel members 41 and 45 are formed in the shape of a frame in the present embodiment, the weight and material cost of the panel members is reduced compared to the case of forming the panel members so as to cover the entire surface of the display panel 11.

### Variation 1 of first embodiment

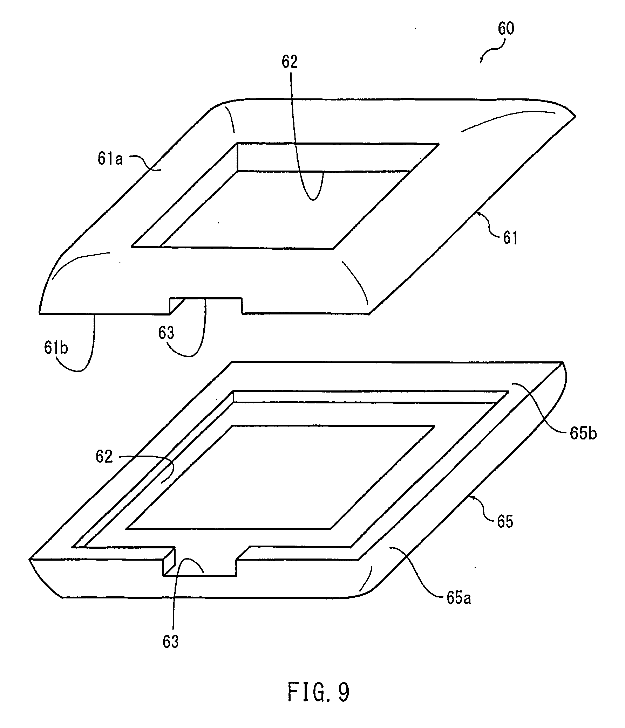

FIG. 9 shows a light-transmitting cover 60 according to Variation 1 of the first embodiment. This variation differs from the configuration of the first embodiment in that recessed parts 62 that correspond to the display panel 11 are provided on faces of a pair of panel members 61 and 65, which constitute the light-transmitting cover 60, that are on the display panel 11 side. Note that the protruding parts and the mating groove parts are not shown in FIG. 9 (the same follows for the figures showing panel members in the other embodiments below).

Similarly to the panel member 41 of the first embodiment, the panel members 61 and 65 also have curved faces 61a and 65a and bottom faces 61b and 65b. Recessed parts 62 that follow the inner peripheral edge of the panel members 61 and 65 are formed on the bottom faces 61b and 65b of the panel members 61 and 65. The recessed parts 62 are formed so as to be large enough for the display panel 11 to be able to be accommodated in a space formed by the recessed parts 62 when the panel members 61 and 65 are combined together. Also, opening groove parts 63 that extend from one part of the recessed parts 62 to the curved faces 61a and 65a of the panel members 61 and 65 are formed in the bottom faces 61b and 65b of the panel members 61 and 65. The flexible wiring 25 is disposed in these opening groove parts 63.

According to this configuration, the display panel 11 can be disposed in the recessed parts 62 provided in the pair of panel members 61 and 65, and the flexible wiring 25 can be disposed in the opening groove parts 63. Accordingly, the display panel 11 and the flexible wiring 25 can be more reliably held between the pair of panel members 61 and 65.

Note that instead of providing the recessed parts 62 and the opening groove parts 63 in the bottom faces 61b and 65b of the pair of panel members 61 and 65 as in Variation 1, a recessed part and an opening groove part may be provided in only one of the panel members.

### Variation 2 of first embodiment

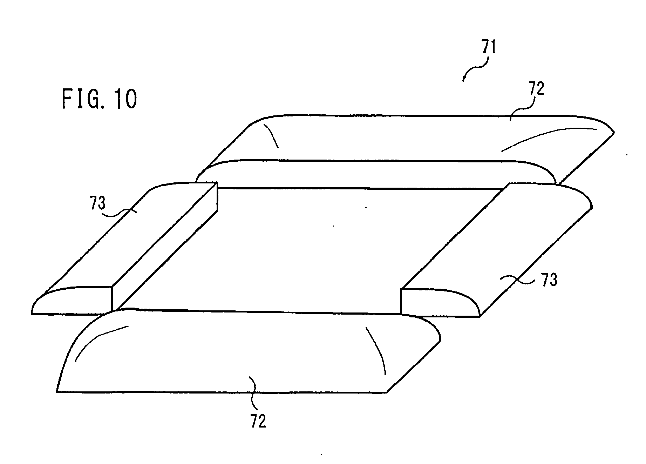

FIG. 10 shows a panel member 71 of a light-transmitting cover according to Variation 2 of the first embodiment. In this variation, the shapes of the frame members that constitute the panel member 71 are different from the shape of the frame members 42 in the first embodiment.

Specifically, the panel member 71 is constituted by a pair of frame members 72 that include two corner parts of the panel member 71, and a pair of frame members 73 that are shorter than the frame members 72 and do not include corner parts. In other words, in this variation, the panel member 71 is constituted by the two types of frame members 72 and 73.

Incidentally, in the case where the panel members have a rectangular shape as in the first embodiment, the cross-section of the corner portions of the panel members necessarily has a larger cross-sectional area than the cross-section of the linear portions. Since the refractive index of light changes in these corner portions, images viewed through the panel members are greatly influenced if there is a seam between frame members in the corner portions

In view of this, omitting connection portions between members in the corner portions of the panel member 71 as in Variation 2 enables maximizing the prevention of influence on the transparency effect obtained by the panel member 71 in the corner portions. Moreover, since the frame members 73 have the same cross-sectional shape in the longitudinal direction, frame members 73 having various lengths can be easily obtained by, for example, changing the length of a cut out from a member.

### Variation 3 of first embodiment

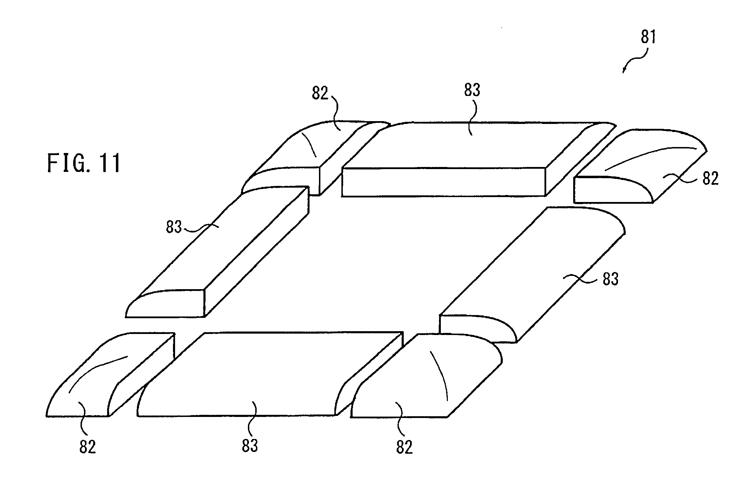

FIG. 11 shows a panel member 81 of a light-transmitting cover according to Variation 3 of the first embodiment. In this variation, the shapes of the frame members that constitute the panel member 81 are different from the shape of the frame members 42 in the first embodiment.

Specifically, the corner parts and linear parts of the panel member 81 are each constituted by separate members. Specifically, the panel member 81 is constituted by four block-shaped frame members 82 that constitute corner parts, and four linear frame members 83 that constitute sides.

According to this configuration, the panel member 81 can be formed by the four frame members 82 that constitute corner parts and the four frame members 83 that constitute linear parts. Similarly to Variation 2, this eliminates connection parts between frame members in the corner portions of the panel member 81, thus enabling maximizing the prevention of influence on the transparency effect obtained by the panel member 81 in the corner portions. Moreover, since the frame members 83 that constitute linear parts have the same cross-sectional shape in the longitudinal direction, frame members 83 having various lengths can be easily obtained by, for example, changing the length of a cut out from a member. Furthermore, changing the lengths of the frame members 83 in this way enables freely changing the size of the panel member 81.

### Variation 4 of first embodiment

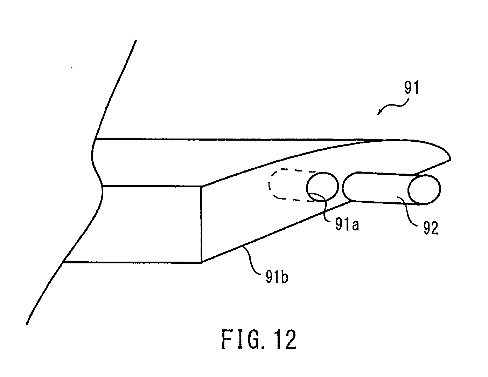

FIG. 12 shows a frame member 91 of a light-transmitting cover according to Variation 4 of the first embodiment. The light-transmitting cover of this variation differs from the configuration of the first embodiment in that frame members 91 are joined together using pins 92. Specifically, other than the joining of the frame members 91 using the pins 92, Variation 4 is the same as the configuration of the first embodiment, and the shape of the frame members 91 is similar to that of the frame members 42 of the first embodiment with the exception of the connection structure.

A mating hole 91a for the insertion on one end side of a pin 92 is formed in an end face of each the frame members 91. Similarly to the projecting parts 42d and the mating recessed parts 42e of the first embodiment, the mating hole 91a is also formed on the bottom face 91b side of the end face of the frame member 91. The depth of the mating hole 91a is approximately half the length of the pin 92. The pin 92 is formed so as to have a circular cross-section, for example. After inserting one end side of the pin 92 into the mating hole 91a of the frame member 91, the other end side of the pin 92 is inserted in the mating hole 91a of another frame member 91, and thus the two frame members 91 are joined using the pin 92.

Note that the configuration of this variation can of course also be applied to the configurations of Variations 1 to 3.

### Second Embodiment

FIG. 13 shows the schematic configuration of a light-transmitting cover 100 according to a second embodiment. This embodiment differs from the first embodiment in that a support part 103, which has the shape of two of the support parts of the first embodiment side-by-side, is provided on the lower side of the light-transmitting cover 100 when the light-transmitting cover 100 is provided upright. In the following description, configurations that are the same as in the first embodiment are given the same reference numerals, and only differing portions will be described. Note that although not particularly shown, panel members 101 and 105 that constitute the light-transmitting cover 100 of the present embodiment are each constituted by four flame members 102 similarly to the panel members 41 and 45 of the first embodiment.

Specifically, support parts 103 and 104, which are constituted by two members having the same configuration as the support part of the first embodiment, are provided on the lower side of the panel members 101 and 105 respectively when the light-transmitting cover 100 is provided upright between the pair of windowpanes 3. The support parts 103 and 104 are shaped such that the two members are side-by-side with their thin sides in contact with each other. Specifically, the support parts 103 and 104 respectively have curved faces 103a and 104a such that the thickness of the support parts 103 and 104 gradually decrease from the two width-direction sides toward the central portion. The curved faces 103a and 104a are each shaped such that the curved faces of two of the support parts of the first embodiment are joined together at the sides where the support parts are thin. Also, the support parts 103 and 104 are respectively joined to frame members 102 in the vicinity of the longitudinal center of the frame members 102 such that the flexible wiring 25 is located in the central portion where the thickness is low. The support part 103 is joined to one of the frame members 102 such that the curved face 103a of the support part 103 is located on the same side as the curved face 102a of the frame member 102 of the panel member 101. Also, the support part 104 is joined to one of the frame members 102 such that the curved face 104a of the support part 104 is located on the same side as the curved face 102a of the frame member 102 of the panel member 105. Note that these connection structures are similar to those in the first embodiment.

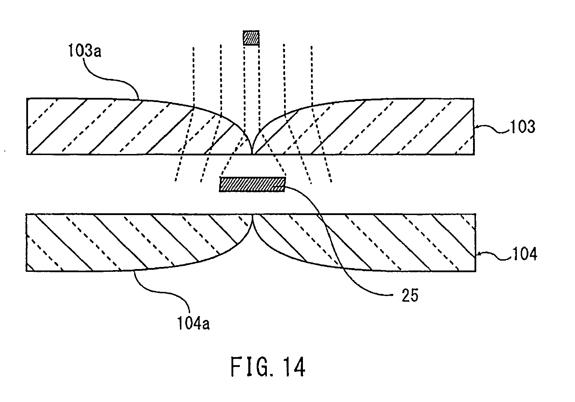

FIG. 14 shows the positional relationship between the support parts 103 and 104 and the flexible wiring 25. As shown in FIG. 14, the thickness in the central portion of the support parts 103 and 104 is low, and the apparent width of the flexibly wiring 25 is reduced by disposing the flexible wiring 25 in the central portion. Moreover, since the curved faces 103a and 104a formed on the support parts 103 and 104 have the shape of two of the curved faces of the support part of the first embodiment side-by-side, light is refracted over a wider range than in the case of the first embodiment. Accordingly, the width of the flexible wiring 25 appears even smaller than in the case of the first embodiment. Here, the hatched part shown on the upper side in FIG. 14 corresponds to the apparent width of the flexible wiring 25.

In this embodiment, the support parts 103 and 104 have the shape of two of the support parts of the first embodiment side-by-side. However, the support parts may have any shape that has a curved face according to which the thickness of the support part decreases from the two width-direction sides of the support part toward to the central portion.

Note that the configurations of the variations of the first embodiment can be applied to the configuration of this embodiment as well.

### Effects of second embodiment

In the present embodiment, the support parts 103 and 105 have the shape of two of the support parts of the first embodiment side-by-side such that the thin sides thereof are in contact with each other. This enables making the flexible wiring 25 disposed in the central portion of the support parts 103 and 105 even less readily perceptible than in the case of the first embodiment. Accordingly, it is possible to obtain a display device according to which the background behind the windowpanes 3 is more readily perceptible.

### Third Embodiment

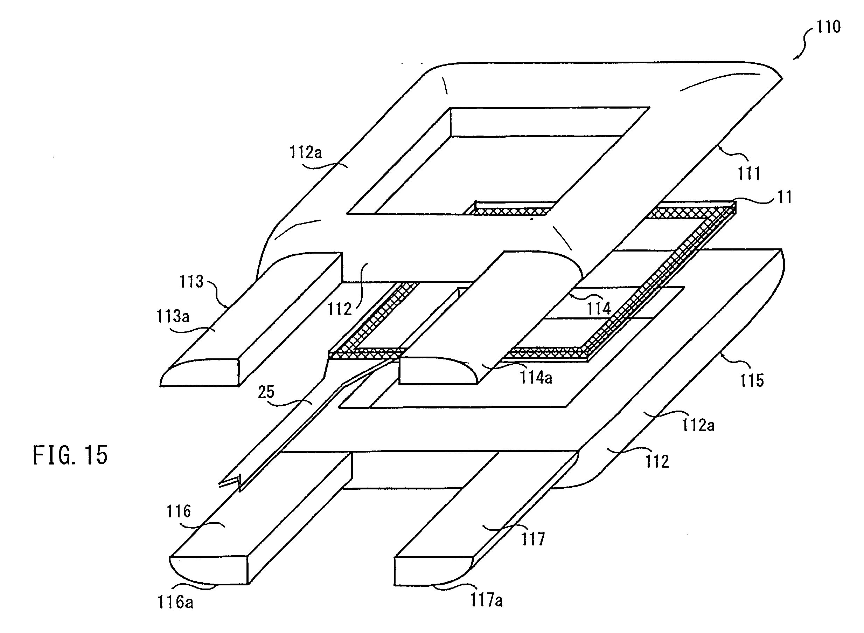

FIG. 15 shows the schematic configuration of a light-transmitting cover 110 according to a third embodiment. The configuration of this embodiment differs from the configurations of the first and second embodiments in that support parts 113, 114, 116, and 117 are provided at the two ends on the lower side of the light-transmitting cover 110 when the light-transmitting cover 110 is provided upright. In the following description, configurations that are the same as in the first and second embodiments are given the same reference numerals, and only differing portions will be described. Note that although not particularly shown, panel members 111 and 115 that constitute the light-transmitting cover 110 of the present embodiment are each constituted by four frame members 112 similarly to the panel member 41 of the first embodiment.

Specifically, the support parts 113, 114, 116, and 117 that have the same configuration as the support parts 46 to 49 of the first embodiment are provided at both corner parts on the lower side of the panel members 111 and 115 when the light-transmitting cover 110 is provided upright between the pair of windowpanes 3. These support parts 113, 114, 116, and 117 respectively have curved faces 113a, 114a, 116a, and 117a that are similar to the curved faces 46a to 49a of the support parts 46 to 49 of the first embodiment. In this embodiment as well, the support parts 113 and 114 are joined to the frame member 112 such that the curved faces 113a and 114a of the support parts 113 and 114 are located on the same side as the curved face 112a of the frame member 112 of the panel member 111. Also, the support parts 116 and 117 are joined to the frame member 112 such that the curved faces 116a and 117a of the support parts 116 and 117 are located on the same side as the curved face 112a of the frame member 112 of the panel member 115. Note that these connection structures are similar to those in the first embodiment.

The flexible wiring 25 is disposed between the support part 113 joined to the panel member 111 and the support part 116 joined to the panel member 115, on the side where the thickness of the support parts 113 and 116 is low.

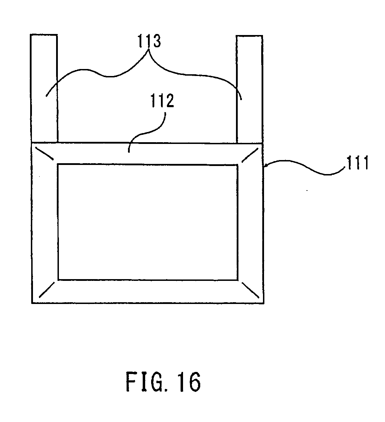

In this embodiment, the support parts 113, 114, 116, and 117 are provided on both end parts of the frame members 112 that constitute the lower side of the panel members 111 and 115 when the light-transmitting cover 110 is provided upright. However, support parts may be provided at places other than the two end parts of the frame members 112, and as shown in a simplified manner in FIG. 16, two support parts 113 may be provided on the frame members 112 on the upper side that constitute part of the panel members 111 and 115 (FIG. 16 showing only the case of the panel member 111). Also, there is no limitation to providing the frame members 112 with two support parts, and three or more support parts may be provided.

Note that the configurations of the variations of the first embodiment can be applied to the configuration of this embodiment as well.

### Effects of third embodiment

According to the above configuration, frame members 112 of the panel members 111 and 115 are provided with two support parts, thus enabling stably holding the panel members 111 and 115 and the display panel 11.

### Fourth Embodiment

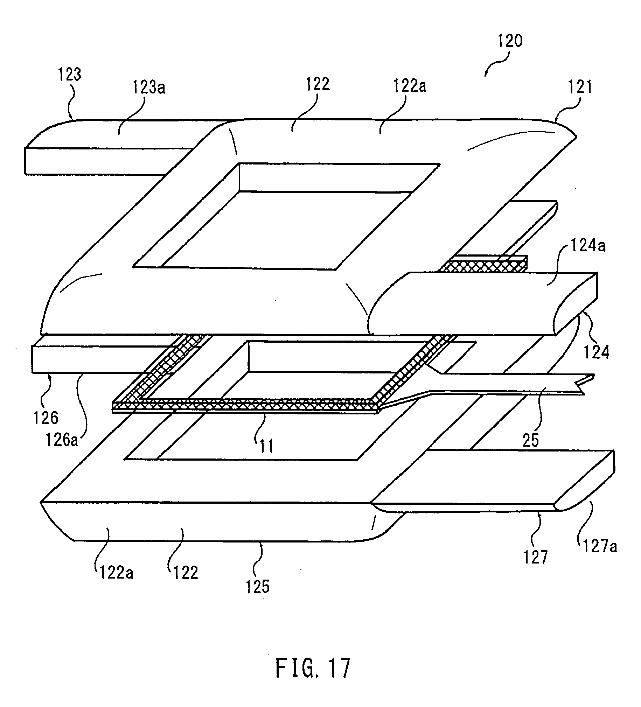

FIG. 17 shows the schematic configuration of a light-transmitting cover 120 according to a fourth embodiment. This embodiment differs from the configuration of the first to third embodiments in that support parts 123, 124, 126, and 127 are provided on the lateral sides of the light-transmitting cover 120 when the light-transmitting cover 120 is provided upright. In the following description, configurations that are the same as in the first to third embodiments are given the same reference numerals, and only differing portions will be described. Note that although not particularly shown, panel members 121 and 125 that constitute the light-transmitting cover 120 of the present embodiment are each constituted by four frame members 122 similarly to the panel member 41 of the first embodiment.

Specifically, the support parts 123, 124, 126, and 127 that have the same configuration as the support parts 46 to 49 of the first embodiment are provided at opposing corners on the lateral sides of the panel members 121 and 125 when the light-transmitting cover 120 is provided upright between the pair of windowpanes 3. Specifically, the support parts 123 and 126 are joined on one end side in upper parts of the frame members 122 that constitute one of the lateral sides of the panel members 121 and 125 when the light-transmitting cover 120 is provided upright. Also, the support parts 124 and 127 are joined on one end side in lower parts of the frame members 122 that constitute the other one of the lateral sides of the panel members 121 and 125 when the light-transmitting cover 120 is provided upright. These support parts 123, 124, 126, and 127 respectively have curved faces 123a, 124a, 126a, and 127a that are similar to the curved faces 46a to 49a of the support parts 46 to 49 of the first embodiment. In this embodiment as well, the support parts 123 and 124 are joined to the frame member 122 such that the curved faces 123a and 124a of the support parts 123 and 124 are located on the same side as the curved face 122a of the frame member 122 of the panel member 121. Also, the support parts 126 and 127 are joined to the frame member 122 such that the curved faces 126a and 127a of the support parts 126 and 127 are located on the same side as the curved face 122a of the frame member 122 of the panel member 125. Note that these connection structures are similar to those in the first embodiment.

The flexible wiring 25 is disposed between the support part 124 joined to the panel member 121 and the support part 127 joined to the panel member 125, on the side where the thickness of the support parts 124 and 127 is low.

Note that the configurations of the variations of the first embodiment can be applied to the configuration of this embodiment as well.

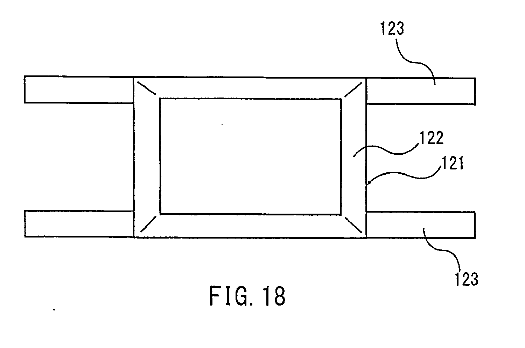

In this embodiment, the support parts 123, 124, 126, and 127 are provided at end parts of the frame members 122 on the lateral sides that constitute part of the panel members 121 and 125 when the light-transmitting cover 120 is provided upright. However, support parts may be provided at places other than the end parts of the frame members 122, and as shown in a simplified manner in FIG. 18, two support parts 123 may be provided on the frame members 122 on the lateral sides that constitute part of the panel members 121 and 125 (FIG. 18 showing only the case of the panel member 121). Also, there is no limitation to providing the frame members 122 with two support parts, and three or more support parts may be provided.

### Effects of fourth embodiment

In this embodiment, the support parts 123, 124, 126, and 127 are provided at the positions of opposing corners of the panel members 121 and 125, on the lateral sides of the panel members 121 and 125 when the light-transmitting cover 120 is provided upright. Accordingly, even in the case where the two panel members 121 and 125 are shaken due to vibration or the like, it is possible to prevent the formation of a large gap between the panel members 121 and 125. In other words, since the panel members 121 and 125 are supported at opposing corner positions by the support parts 123, 124, 126, and 127, tilting of the panel members 121 and 125 can be prevented. This enables preventing the formation of a large gap between the two panel members 121 and 125 due to tilting of the panel members 121 and 125 resulting from vibration or the like.

Also, with the configuration of this embodiment, even in the case where there is no spatial allowance above and below the panel members 121 and 125, the panel members 121 and 125 can be supported on their lateral sides. This provides more freedom in the design of the support structure for the panel members 121 and 125.

### Fifth Embodiment

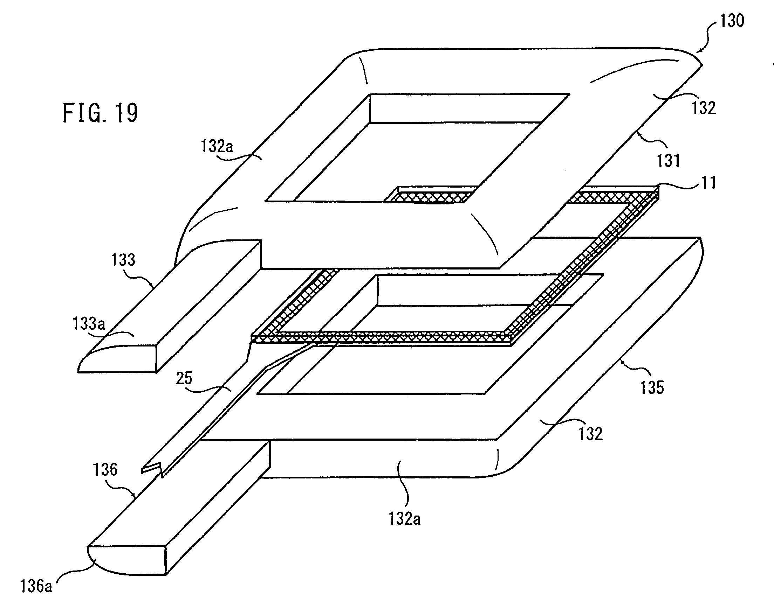

FIG. 19 shows the schematic configuration of a light-transmitting cover 130 according to a fifth embodiment. The light-transmitting cover 130 of this embodiment differs from the configuration of the first to fourth embodiments in that panel members 131 and 135 that constitute the light-transmitting cover 130 are each provided with one support part. In the following description, configurations that are the same as in the first to fourth embodiments are given the same reference numerals, and only differing portions will be described. Although not particular shown, the panel members 131 and 135 of the present embodiment are also constituted by four frame members 132 similarly to the panel member 41 of the first embodiment.

Specifically, support parts 133 and 136 are respectively joined to the lower sides of the panel members 131 and 135 when the light-transmitting cover 130 is provided upright between the pair of windowpanes 3. In this embodiment, the support parts 133 and 136 are joined to one end part of the frame members 132 that constitute the panel members 131 and 135. Similarly to the other embodiments, the support parts 133 and 136 each have the same configuration as the support parts 46 to 49 of the first embodiment. Specifically, the support parts 133 and 136 have curved faces 133a and 136a that are similar to the curved faces 46a to 49a of the support parts 46 to 49 of the first embodiment. The support part 133 is joined to the frame member 132 such that the curved face 133a of the support part 133 is located on the same side as the curved face 132a of the frame member 132 of the panel member 131. Also, the support part 136 is joined to the frame member 132 such that the curved face 136a of the support part 136 is located on the same side as the curved face 132a of the frame member 132 of the panel member 135. Note that these connection structures are similar to those in the first embodiment.

The flexible wiring 25 is disposed between the support part 133 joined to the panel member 131 and the support part 136 joined to the panel member 135. This flexible wiring 25 is disposed in the portion where the thickness of the support parts 133 and 136 is low. Accordingly, similar to the above-described embodiments, the flexible wiring 25 appears narrower than it actually is.

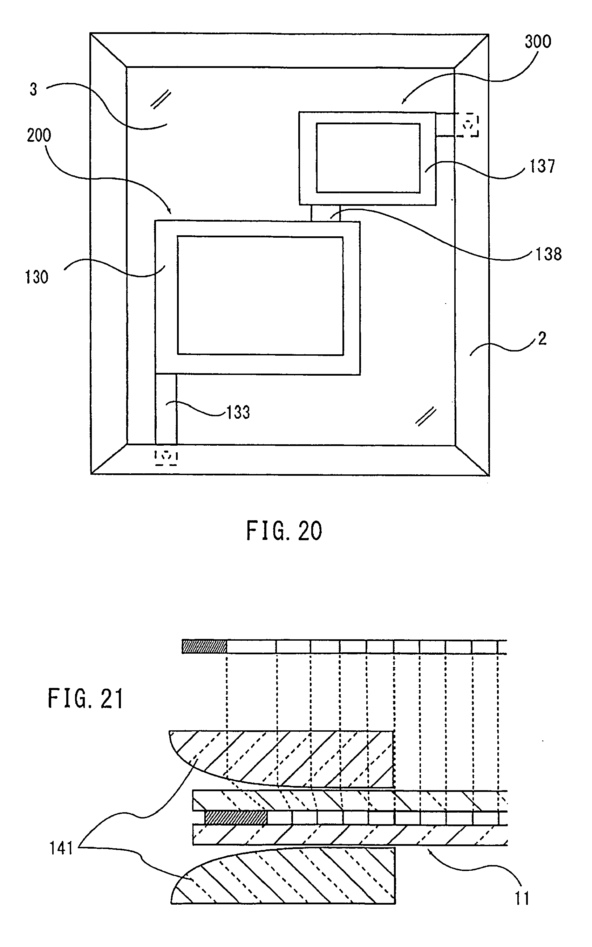

FIG. 20 shows an example where a display device 200 including the light-transmitting cover 130 configured as described above is disposed between the pair of windowpanes 3. In FIG. 20, the display device 200 including the light-transmitting cover 130 and a display device 300 including a different light-transmitting cover 137 are joined together by a joining part 138. According to this, even with the configuration shown in FIG. 19 in which only the one support part 133 is joined to the panel member 131, the display devices 200 and 300 can be stably held against the window frame 2.

In this embodiment, the support parts 133 and 136 are joined to end parts of the frame members 132 on the lower side that constitute the panel members 131 and 135. However, the support parts 133 and 136 may be joined at any location on the panel members 131 and 135 at which the panel members 131 and 135 can be supported.

Note that the configurations of the variations of the first embodiment can be applied to the configuration of this embodiment as well.

### Effects of fifth embodiment

According to the above configuration, one support part 133 and one support part 136 are provided for the panel members 131 and 135 respectively, thus enabling simplifying the configuration of the light-transmitting cover 130. This enables a reduction in the amount of material constituting the light-transmitting cover 130 compared to the case of providing multiple support parts for the panel members. Also, even with such a configuration having a reduced number of support parts, the display device 200 can be stably disposed in the window frame 2 by being joined to the display device 300 that includes the other light-transmitting cover 137 as shown in FIG. 20.

### Other Embodiments

Although embodiments of the present invention are described above, the above-described embodiments are merely illustrative examples for implementing the present invention. Accordingly, the present invention is not intended to be limited to the above-described embodiments, and appropriate modifications can be made to the above-described embodiments without departing from the gist of the invention.

In the embodiments, a liquid crystal panel is used as the display panel 11. However, as long as it is possible to switch between a light transmitting state and a light scattering state, a panel having another configuration such as an organic EL panel may be used as the display panel.

In the embodiments, the display device is disposed between the pair of windowpanes. However, the plates that form the space in which the display device is disposed are not limited to being windowpanes, and the plates may be made of any material as long as they are transparent plates. In other words, the transparent plates include transparent plates made of not only general silicate glass, but also a resin material (e.g., an acrylic plate) or another substance.

In the embodiments, the cross-sectional shape of the support parts is the same shape as the frame members that constitute the panel members of the light-transmitting covers. However, the cross-sectional shape of the support parts that do not cover the flexible wiring 25 may be, for example, rectangular, circular, or another cross-sectional shape.

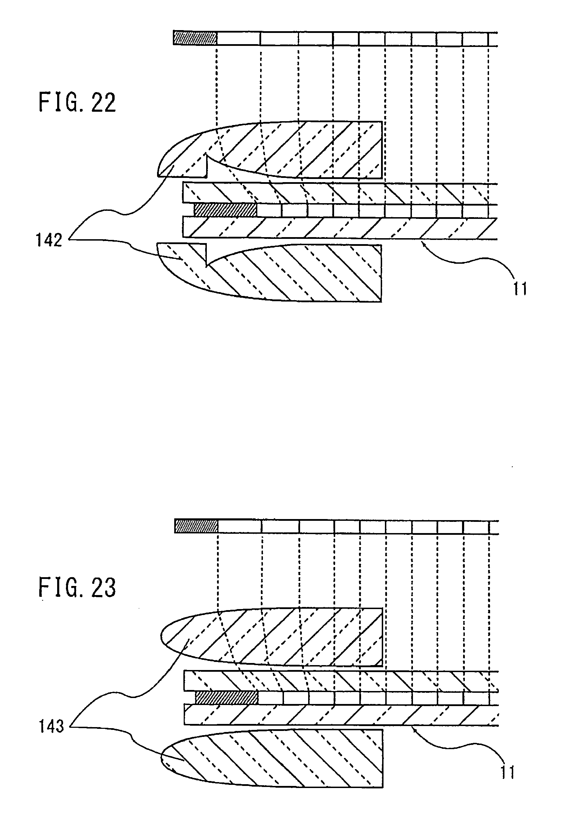

In the embodiments, the cross-sectional shape of the frame members of the light-transmitting cover is substantially 1/4 the cross-section of an ellipse. However, the cross-sectional shape of the frame members may be any cross-sectional shape as long as it is a shape that obtains the lens effect whereby the frame region 11b of the display panel 11 is less readily visible. For example, as shown in FIG. 21, the face on the display panel 11 side of frame members 141 may be formed as a curved face, or both faces of frame members 142 and 143 may be formed as curved faces as shown in FIGS. 22 and 23. By forming both faces of the frame members 142 and 143 as curved faces as shown in FIGS. 22 and 23, light is refracted twice in the frame members 142 and 143, thus further reducing the apparent width of the frame region 11b and making the frame region 11b even less readily visible. In other words, with the configurations shown in FIGS. 22 and 23, assuming that the apparent width of the frame region 11b is to be made approximately the same as in the case of forming only one face as a curved face, the thickness of the frame members can be reduced compared to the case of forming only one face as a curved face.

Although the panel members are supported by the support parts at one point or two points in the embodiments, the panel members may be supported by multiple support parts at three points or four points. Increasing the number of places where the panel members are supported enables more stably supporting the panel members. In particular, in the case where the panel members are rectangular such as in the embodiments, it is preferable that multiple corner parts are supported by the support parts.

In the embodiments, the support parts are formed separately from the frame members of the panel members, and are joined to the frame members. However, the support parts may be formed integrally with the frame members. Also, although the panel members are configured using multiple frame members in the embodiments, there is no limitation to this, and the panel members may be formed integrally.

In the embodiments, members are joined together by the mating of the protruding parts 42f with the mating groove parts 42g and 42h, or the mating of the projecting parts 42d with the mating recessed parts 42e. However, any configuration may be used for joining members together, such as adhesion using an adhesive or joining using another member.

In the embodiments, the active matrix substrate 20 and the control unit 4 are directly connected using the flexible wiring 25. However, a configuration is possible in which a communication device that exchanges signals with the control unit 4 is provided between the windowpanes, and the communication device and the active matrix substrate 20 are connected by the flexible wiring 25.

In the first to fourth embodiments, the panel members are provided with the support parts in either only the vertical direction or the horizontal direction. However, the support parts may be provided at any locations, as long as they are provided at at least two places out of the vertical direction and the horizontal direction. For example, in the case where the panel members are rectangular, the support parts may be provided at the same corner part so as to extend in different directions.

In the fifth embodiment, multiple configurations in which one support part is joined to a panel member are provided in the window frame 2. However, multiple display devices including the light-transmitting cover of any of the first to fourth embodiments may be provided in the window frame 2.

### Industrial Applicability

A building material with a display device according to the present invention is applicable as a building material that includes a display device.

## Claims

1. A building material with a display device comprising:
a display panel having a display region that can switch between a light transmitting state and a non-light-transmitting state and a frame region serving as a non-display region formed on an outer side of the display region;
a lens part disposed on the display panel so as to cover at least a part of the frame region and at least a part of the display region that is adjacent to the frame region; and
a pair of transparent plates held in parallel within a holding frame so as to sandwich the display panel and the lens part,
wherein the lens part is shaped such that the thickness thereof decreases from the display region toward the frame region.

2. The building material with a display device according to claim 1,
wherein the frame region is formed so as to surround the display region, and the lens part is provided so as to cover the entirety of the frame region.

3. The building material with a display device according to claim 2, wherein the lens part is formed in the shape of a frame such that a central portion of the display region is exposed.

4. The building material with a display device according to any one of claims 1 to 3, further comprising a support part that joins the lens part and the holding frame so as to support the lens part and the display panel within the holding frame.

5. A building material with a display device according to claim 4, wherein at least two of the support parts are provided between the lens part and the holding frame.

6. The building material with a display device according to claim 4 or 5, wherein the support parts are joined to the lens part on opposite sides of the lens part in a view from a direction orthogonal to a surface of the transparent plate.

7. The building material with a display device according to any one of claims 1 to 6, wherein the lens part is disposed so as to be on two faces of the display panel.

8. A building material with a display device according to claim 7,
wherein a protruding part that projects toward the display panel side is provided on one of the lens parts disposed on the two faces of the display panel, and
a mating groove part for mating with the protruding part is provided on the other one of the lens parts.

9. The building material with a display device according to any one of claims 4 to 8,
wherein the support part is constituted by a bar-shaped member that has a curved face such that the thickness of the support part on one side in the width direction is lower than that on the other side, and
wiring connected to the display panel is disposed such that a perceptible side of the wiring is covered by the one side of the support part in the width direction.

10. A building material with a display device according to claim 9,
wherein the curved face is formed such that the thickness of the support part decreases from both width-direction sides of the support part toward a central portion, and
the wiring is disposed such that the perceptible side thereof is covered by the central portion of the curved face.

11. The building material with a display device according to any one of claims 1 to 10, wherein a recessed part in which the display panel can be accommodated is formed on a face of the lens part on the display panel side.

12. The building material with a display device according to any one of claims 1 to 11, wherein the lens part is constituted by a plurality of frame members that are joined together.

13. A building material with a display device according to claim 12,
wherein for each of the frame members, a projecting part that projects in the longitudinal direction of the frame member is formed on one end part, and a mating recessed part that has a shape capable of mating with the projecting part is formed on the other end part, and
on the end parts of the frame members, the projecting parts and the mating recessed parts are formed on the side that comes into contact with the display panel.

14. A display device comprising:
a display panel having a display region that can switch between a light transmitting state and a non-light-transmitting state and a frame region serving as a non-display region formed on an outer side of the display region;
a lens part disposed on the display panel so as to cover at least a part of the frame region and at least a part of the display region that is adjacent to the frame region; and
a support part that joins the lens part and a holding frame for holding a pair of transparent plates that are disposed so as to sandwich the display panel and the lens part.
